# EUROPEAN PATENT APPLICATION

(11) **EP 1 564 117 A1**
(43) Date of publication of application: **17.08.2005**
(21) Application number: 05075333.4
(22) Date of filing: 10.02.2005
(51) Int. Cl.: B62D 53/06, B60P 1/36, B60P 1/64

(54) **Mobile supporting structure**

(30) Priority: 10.02.2004 NL 1025455
(71) Applicant: Vlastuin Rolling Equipment B.V., 4040 DC Kesteren (NL)
(72) Inventor: Sterk, Jan Elias, 6671 CK Zetten (NL)
(74) Representative: Dorna, Peter

(57) **Abstract**

The invention provides an elongated mobile supporting structure for transport containers, comprising a chassis provided with a main chassis section and a sliding chassis (5,6) section, which is movable with respect to the main chassis (4) section, as well as with front securing means and rear securing means for securing a transport container near the front side and the rear side thereof. The main chassis section comprises central supporting means for supporting a transport container between said front and said rear securing means. The supporting structure further comprises at least one axle pair (11a,11b,11c), which is connected to the main chassis section. According to the invention, the central support means comprise a bearing (17) arrangement to enable movement of a transport container supported by the central supporting means along said central supporting means.

## Description

The invention relates to an elongated mobile supporting structure for transport containers, comprising a chassis provided with a main chassis section and a sliding chassis section, which is movable with respect to the main chassis section, as well as with front securing means and rear securing means for securing a transport container near the front side and the rear side thereof, said main chassis section comprising central supporting means for supporting a transport container between said front and said rear securing means, said supporting structure further comprising at least one axle pair, which is connected to the main chassis section.

At the time of the present invention, such a supporting structure is being marketed under the trade name "flexitrailer®". Said supporting structure offers major advantages in that it can be flexibly used for transporting (sea) containers of varying length, wherein, depending on the length of the containers, the main chassis section is embodied as a central chassis section and the sliding chassis section is embodied as a front chassis section, which sections take up a specific sliding position with respect to each other. Since the central chassis section and the front chassis section are capable of sliding movement with respect to each other, it is also possible, depending on the distribution of the weight over the length of a transport container, to position said at least one axle pair connected to the central chassis section in such a manner that an optimum distribution of the axle load is obtained, thus making it possible to load the container itself optimally as well. A limitation in this connection is the fact that said movement of the central chassis section and the front chassis section with respect to each other cannot take place when a container is present on the supporting structure.

The aforesaid drawback also applies to the container that is described in German patent application DE-A1-10145432. The trailer in question comprises a main chassis section, at the front side and the rear side of which a front sliding chassis section and a rear sliding chassis section, respectively, can be telescoped in and out in a fixed ratio with respect to the main chassis section by means of pressure cylinders. A number of securing points are provided both on the main chassis section and on the sliding chassis sections, on which a (sea) container to be transported can be supported in a secured position with the lower corner points thereof.

The object of the invention is to provide a solution to the above-described problems. More specifically, the invention is aimed at providing an elongated, mobile supporting structure as referred to in the introduction, by means of which it is possible to transport sea containers of a standardised type, which are well-known to those skilled in the art and whose bottom is not designed for being guided over a supporting surface. The invention is furthermore aimed at providing a supporting structure by which the above objects can be accomplished, whilst in addition the supporting structure is of simple construction. To that end, said central support means comprise a bearing arrangement to enable movement of a transport container supported by the central supporting means along said central supporting means. Thus it is possible to move the main chassis section and the sliding chassis section with respect to each other all the same when a transport container is supported on the supporting structure, by releasing the locking engagement of the container at the location of either the front securing means or the rear securing means and subsequently pushing or pulling the container via the securing means that are still operative during relative movement of the main chassis section and the sliding chassis section, with the transport container sliding over the central supporting means, which comprise a bearing arrangement.

Preferably, the bearing arrangement is a sliding bearing arrangement. This makes it possible to use a relatively simple bearing construction.

A constructionally advantageous embodiment is obtained if the sliding bearing arrangement comprises a sliding surface as well as load-bearing element provided with a supporting surface on which the container is directly supported, which element is movable over said sliding surface. Thus, the transport container and the sliding surface are not in direct contact with each other, as a result of which the properties of the load-bearing element and the sliding surface can be optimized for moving the load-bearing element with the container present thereon along the sliding bearing arrangement.

Quite preferably, the sliding surface comprises a plastic material, since said materials are available at relatively low cost in qualities that exhibit a low coefficient of friction.

The load-bearing element is preferably an endless element, so that it will take up the same amount of space at all times, irrespective of the longitudinal position of the transport container with respect to the central chassis section.

A correct guidance of the supporting surface can be effected if the load-bearing element comprises at least one chain built up of mutually pivotable link elements, at least some of which are connected to the supporting surface, or at least some of which include a surface that forms the supporting surface.

Preferably, for reasons of equilibrium of forces and moments, a chain is provided at two opposite sides of the supporting surface.

It may be very advantageous to use a roller bearing arrangement as an alternative to the sliding bearing arrangement. Such a preferred embodiment is in particular advantageous in view of the relatively low rolling resistance, i.e. in particular if stringent requirements are made of the guiding function of the bearing arrangement, in particular in those cases in which relatively heavy transport containers are used.

Preferably, the roller bearing arrangement comprises rollers as well as a load-bearing element provided with a supporting surface on which the container is directly supported, which element is movable over said rollers. The upper sides of a number of adjacent rollers define a rolling surface comparable to a sliding surface of a sliding bearing arrangement according to a preferred embodiment as described above. Also the load-bearing element as used with a roller bearing arrangement is comparable to a load-bearing element as used with the sliding bearing arrangement according to the preferred embodiment in question. In that sense it is conceivable that it is in principle possible to substitute a sliding member comprising a sliding surface, which forms part of a sliding bearing arrangement, for a number of adjacent rollers. Consequently, the preferred embodiments that relate to a load-bearing element as used with a sliding surface arrangement also apply to a load-bearing element as used with a roller bearing arrangement.

To optimally utilise the possibilities of the present invention, the chassis preferably comprises a further sliding chassis section provided with front or rear securing means, which is capable of sliding movement with respect to the main chassis section. The fact that the front or the rear securing means are mounted on said further sliding chassis section does not imply that such securing means cannot be present on the main chassis section as well. Thus, the supporting structure is adapted for supporting transport containers of varying length, e.g. having a length of 20, 30, 40 or 45 feet.

In order to be able to fix the relative position of the sliding chassis section, the main chassis section and (possibly) the further sliding chassis section, locking means are preferably provided for locking said main chassis section on the one hand and said sliding chassis section and/or said further sliding chassis section on the other hand in a specific position relative to each other.

To realise the sliding movement of the main chassis section with respect to the sliding chassis section and possibly of the further sliding chassis section with respect to the main chassis section in a constructionally simple manner, the main chassis section is preferably provided with a telescopic portion, within which a telescopic portion of the sliding chassis section and/or a telescopic portion of the further sliding chassis section are movable.

To realise an optimum range, it is furthermore preferable if one of the telescopic portion of the sliding chassis section and the telescopic portion of the further sliding chassis section is positioned within the other telescopic portion in a telescoped position of the supporting structure.

In the light of the aforesaid use of the supporting structure according to the invention, it is preferable if the front and the rear securing means are provided at different longitudinal positions of the chassis so as to enable the supporting structure to support transport containers of varying length.

The invention also provides a method for using a supporting structure according to the invention, comprising the steps of
A providing an elongated, mobile supporting structure according to any one of the preceding claims, on which a transport container is supported, which is secured to the supporting structure by means of said front securing means and said rear securing means near the front side and the rear side, respectively, of the transport container,
B pushing or pulling the transport container over the supporting structure via a locking engagement provided by the securing means, by telescoping the sliding chassis section in or out with respect to the main chassis section, with the transport container being supported on and at the same time being moved over the central supporting means.

The advantages of using such a method will already be apparent to those skilled in the art from the foregoing and will become even more apparent hereinafter.

Preferably, the method according to the invention comprises as an additional step between step A and step B the step of
C releasing the locking engagement by the securing means at the front side or at the rear side of the transport container and maintaining the other locking engagement,
wherein said pushing or pulling of the transport container during step B takes place via the other locking engagement. This preferred embodiment is in particular intended for use with relatively short containers, which can thus be moved along the length of the supporting structure.

The invention will be explained in more detail hereinafter by means of a description of a number of preferred embodiments of the invention, in which reference is made to the accompanying figures.
Figures 1a and 1b are a side view and a rear view, respectively, of a supporting structure in the form of a trailer according to a first embodiment of the invention, which is hauled by a truck.
Figure 2 is a side view of the trailer.
Figure 3 is an isolated side view of the sliding bearing arrangement used with the trailer of figure 2.
Figure 4 is a vertical cross-sectional view of the sliding bearing arrangement and the manner in which it is mounted on a trailer as shown in figure 2.
Figure 5 is a more detailed view of a part of figure 3.
Figures 6a and 6b are a side view and a rear view, respectively, of a supporting structure in the form of a trailer according to a second embodiment of the invention, which is hauled by a truck.
Figures 7a-7c show three successive situations during the use of a supporting structure according to the invention.
Figures 8a-8c show three successive situations during a different type of use of a supporting structure according to the invention.
Figure 9 is a vertical cross-sectional view, comparable to the view of figure 4, of a roller bearing arrangement.

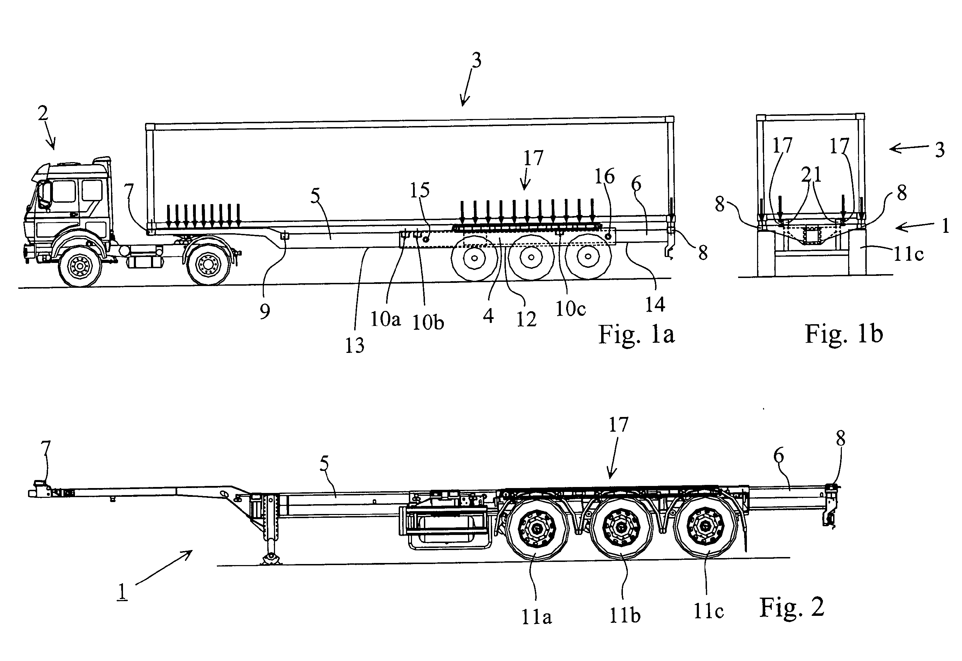

Figures 1-5 relate to a first embodiment of a supporting structure according to the invention. The supporting structure is embodied as a trailer 1 (figure 2), which is intended for being hauled by a truck 2. A 40-foot transport container 3 is supported on the trailer 1. The trailer 1 is built up substantially of a main chassis section, a sliding chassis section and a further sliding chassis section configured as, respectively, a central chassis section 4, a front chassis section 5 and a rear chassis section 6. Three axle pairs 11a, 11b, 11c are fixedly connected to the central chassis section 4. The front chassis section 5 and the rear chassis section 6 are capable of sliding movement in the longitudinal direction of the trailer 1 with respect to the central chassis section 4 so as to thus influence the length of the trailer 1 and adapt it for supporting transport containers of varying length. So-called twist locks 7, 8 are provided at the front end of the front chassis section 5 and the rear end of the rear chassis section 6, at the location of the corners of the transport container 3, for supporting and securing the transport container 3 to the trailer 1, which twist locks are known per se to those skilled in the art and require no further explanation herein. In addition to the fact that the front chassis section 5 and the rear chassis section 6 are capable of sliding movement with respect to the central chassis section 4, a number of additional twist locks 9, 10a, 10b, 10c are provided on the front chassis section 5 and the central chassis section 4, respectively, so as to adapt the trailer for supporting transport containers having a length different from that of the transport container 3.

To enable sliding movement of the front chassis section 5 and the rear chassis section 6 with respect to the central chassis section 4, the central chassis section 4 comprises a longitudinal guide sleeve 12, within which a longitudinal guide sleeve 13 of the front chassis section 5 is movable. The longitudinal guide sleeve 14 of the rear chassis section 6 is movable within the longitudinal guide sleeve 13 and also within the longitudinal guide sleeve 12.To lock the central chassis section 4 on the one hand and the front chassis section 5 and the rear chassis section 6 on the other hand in a specific position obtained after sliding movement relative to each other, locking pins 15, 16 are provided, which are passed through aligned holes in the longitudinal guide sleeve 12 and the longitudinal guide sleeve 13 on the one hand and the longitudinal guide sleeve 12 and the longitudinal guide sleeve 14 on the other hand.

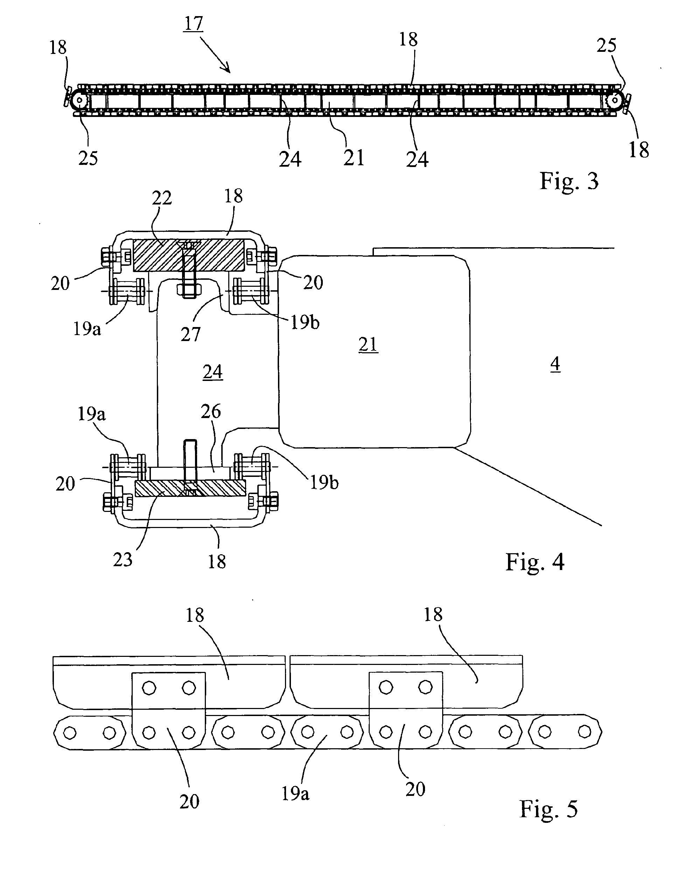

The trailer 1 is provided with a sliding bearing arrangement 17 on the central chassis section 4 (figures 3-5). The bearing arrangement comprises two pairs of end wheels 25 (not shown in figure 4), which are spaced a distance of about 4 m apart. Two conventional link chains 19a, 19b are passed over the end wheels 25. Link plates 20 are connected to every third link of the link chains 19a, 19b, which connecting plates are on the other hand connected to the downwardly extending legs of U-shaped load-bearing elements 18 by means of bold and nut combinations. The upwardly facing sides of the web of the load-bearing elements 18 form a supporting surface for the transport container 3. Typically, the transport container 3 is provided with cross beams at the bottom side, for example, which cross beams can rest on the load-bearing elements 18. Thus an endless load-bearing chain consisting of load-bearing elements 18 linked together via chains 19a, 19b is provided.

A sliding strip 22 of plastic material is present between the legs in the upper part of the load-bearing chain consisting of load-bearing elements 18, which sliding strip extends over practically the entire distance between the end wheels 25. The upper load-bearing elements 18 are supported on the sliding strip 22. The sliding strip 22 is in turn secured to the U-section 27, which is supported at regularly spaced-apart (in longitudinal direction) locations by tie plates 24, which are in turn welded to the longitudinal sleeve 21 that forms part of the central chassis section 4. As figure 1b shows, the axle pairs 11a, 11b, 11c are also fixed to the longitudinal sleeve 21.

A steel securing strip 26, which extends practically the entire distance between the end wheels 25, is welded to the bottom side of the tie plates 24. A sliding strip 23 of plastic material is fixed to the bottom side of said securing strip, which sliding strip projects just beyond the securing strip 26 on either side thereof. The facing sides of the chains 19a, 19b, insofar as they extend below the end wheels 25, are supported on said projecting parts.

The plastic material of the sliding strips 22 and 23 has a low coefficient of friction so as to facilitate sliding movement thereon by the load-bearing elements 18 on the one hand and the chains 19a, 19b on the other hand as much as possible when a container 3 is supported on the load-bearing elements 18.

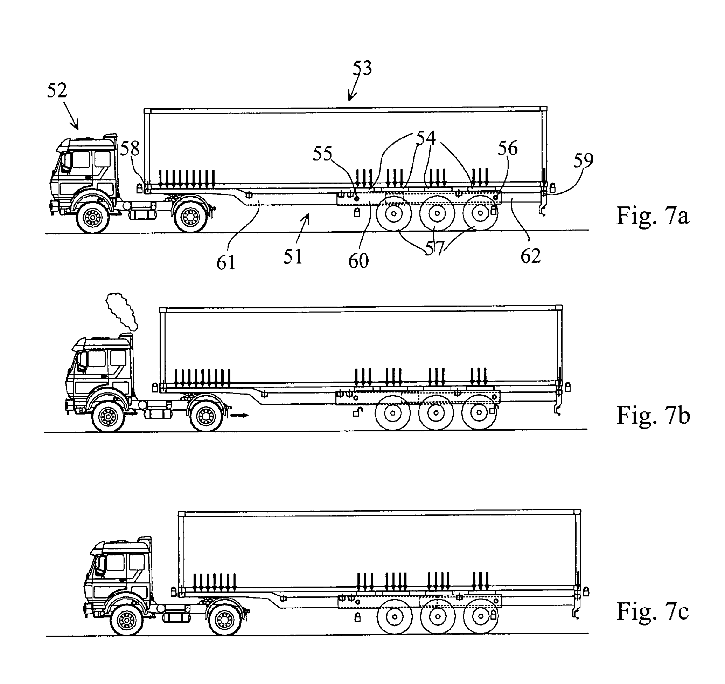

As appears from figure 1a, the transport container 3 is supported not only on the load-bearing elements 18 of the sliding bearing arrangement 17 but also at the location of the twist locks 7, 8, and furthermore in particular on the front part of the front chassis section 5. The manner in which the trailer 1 can be used will be further explained yet with reference to figures 7a-8c.

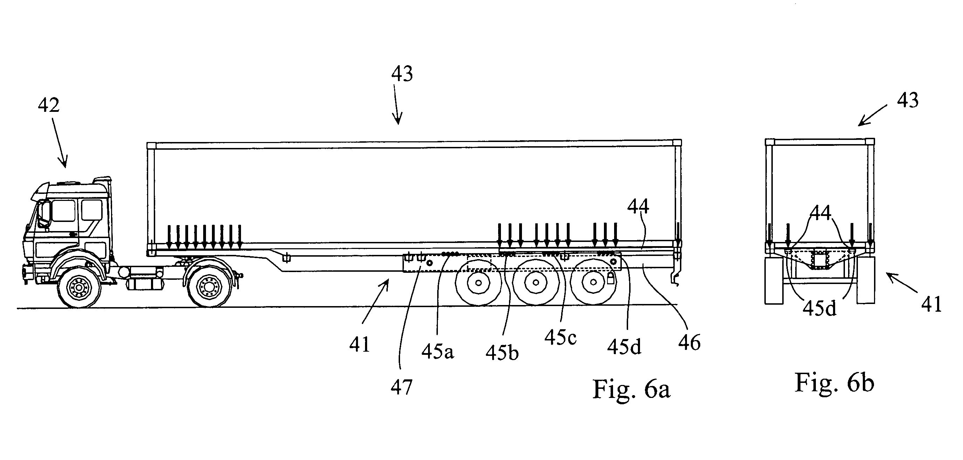

Figures 6a and 6b are a side view and a rear view, respectively, of a trailer 41 in combination with a truck 42 and a transport container 43. Unlike the trailer 1 shown in figures 1-5, which is provided with a sliding bearing arrangement 17, the trailer 41 is provided with a roller bearing arrangement comprising four sets of rollers 45a, 45b, 45c, 45d mounted on either side of the plane of symmetry of the trailer 41. The transport container 43 is (partially) supported on the trailer 41 via the sets of rollers 45a, 45b, 45c, 45d, with only the sets of rollers 45b, 45c, 45d contributing to the support of the transport container in the illustrated situation. To help support the transport container, knowing that transport containers generally do not have a flat underside, two intermediate strips 44 are provided between the transport container 43 and the sets of rollers 45a, 45b, 45c, 45d. Said intermediary strips may be detached both from the trailer 41 and from the transport container 3, for example, but alternatively they may also be connected to the trailer 41, more specifically to the rear chassis section 46 thereof. The roller bearing arrangement 47 thus realised makes it possible to move the transport container 43 and the central chassis section 47 on which the sets of rollers 45a, 45b, 45c, 45d are mounted with respect to each other when the transporter 43 is (partially) supported on the chassis 41, more specifically on the central chassis section 47 thereof.

Figures 7a-7c show a first use of the chassis 51 forming a mobile supporting structure according to the invention. Numeral 54 schematically shows a bearing arrangement that is operative between (the central chassis section 60 of) the chassis 51 and the transport container 53. Said bearing arrangement 54 may be a sliding bearing arrangement or a roller bearing arrangement, as shown in figures 1-6. Figure 7a shows a starting situation in which the front twist locks of 58 and the rear twist locks 59 are closed and the locking devices 55, 56 are operative to prevent the front chassis section 61 and the rear chassis section 62 from moving with respect to each other and with respect to the central chassis section 60. Figures 7b shows a next situation, in which the locking devices 55, 56 are unlocked, so that the aforesaid movement can take place. The axle pairs 57 are braked and the truck 52 is reversed. Since the trailer 51 and the 40-foot container 53 are locked in position relative to each other at the location of the twist locks 58 and 59, the front chassis section 61 and the rear chassis section 62 move rearwards with respect to the central chassis section 60, with the central chassis section retaining its spatial position. Comparatively speaking, the axle pairs 57 thus move forwards with respect to the transport container 53, which is shown in figure 7c. The use as illustrated in figures 7a-7c may be desirable in order to obtain a favourable axle load, so that the transport container 53 can be optimally loaded.

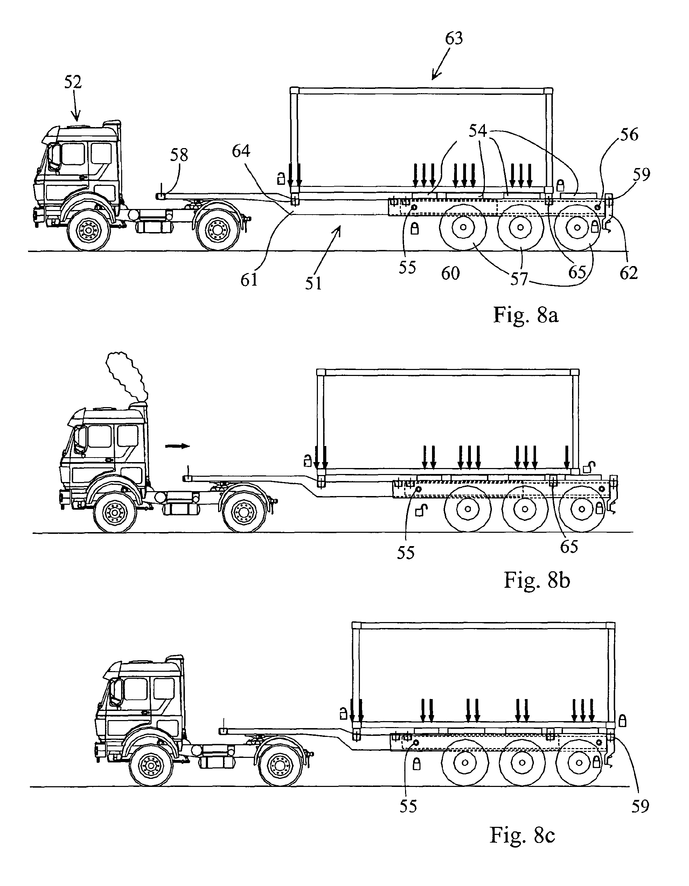

Figures 8a-8c show a second use of the trailer 51 in combination with the truck 52. A 20-foot transport container 63 is supported on the trailer 51. Because of the short length of said transport container 63 in comparison with the transport container 53, twist locks 64 and 65, present on the front chassis section 61 and the central chassis section 60, respectively, are used instead of twist locks 58 and 59. Present between the central chassis section 60 and the transport container 63 is the bearing arrangement 54 (schematically indicated), for example a roller bearing arrangement or a sliding bearing arrangement. As figures 8a, 8b and 8c show, the rear chassis section 62 is fully retracted. The rear side of the transport container 63 is positioned some distance away from the rear side of the trailer 51, which situation is desirable during transport with a view to obtaining a favourable axle load. Such a distance is inconvenient, however, when the transport container 63 is being unloaded via the rear side thereof. The following procedure may be followed for eliminating this inconvenience. Upon arrival at an unloading location, the locking device 55 and the twist locks 65 are unlocked, after which the truck 52 starts to reverse (figure 8b). The transport container 63 is thus made to move rearwards via the twist locks 64, with the front chassis section 61 sliding into the central chassis section 60 and the transport container 63 being slidably supported on the bearings 54. Said sliding movement is continued until the rear side of the transport container 63 coincides with the rear side of the trailer 51, after which the locking device 55 and the twist locks 59 are locked in position. From the situation, unloading of the transport container 63 can take place without any difficulty.

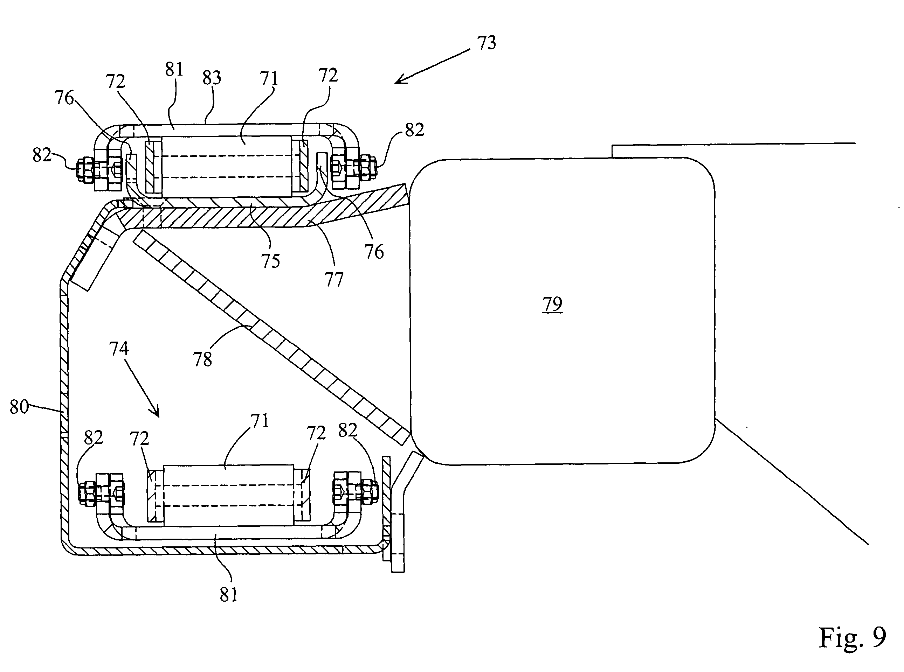

Figure 9 shows an alternative embodiment of a bearing arrangement as shown in figure 4. A roller bearing arrangement is used instead of a sliding bearing arrangement. The roller bearing arrangement comprises an endless roller chain including a forward part 73 and a return part 74 positioned thereunder. The rollers 71 are arranged one behind another, rolling over the upper side of the horizontal web 75 of a U-shaped bearing section in the forward part 73 and being pivotally interconnected by means of link elements 72. The legs 76 of the U-shaped bearing section extend on either side of the roller chain. The U-shaped bearing section is in turn supported on a substantially horizontal supporting strip 77, to which it is also connected. The supporting strip 77 is supported from the longitudinal sleeve 79 via stays 78. A guard member 80 extends from the supporting strip around the return part 74. The roller bearing arrangement furthermore comprises a load-bearing chain passed over the roller chain, whose load-bearing links 81 are U-shaped, comprising an inwardly facing open side and a varying width so as to be able to pass through the bends between the forward part 73 and the return part 74. The load-bearing links 81 are pivotally interconnected by means of pivot pins 82 at the location of the legs of the U-shape thereof. In the forward part 73 (and also in the return part 74 for that matter), the flat outer sides 83 form a substantially continuous supporting surface with only small seams being present between the load-bearing links 81. In the illustrated embodiment, (one side of) a transport container is supported on said continuous supporting surface, which is in fact built up of a large number of small supporting surfaces. The container is capable of movement over said bearing arrangement, with the forward part moving at the same speed as the container and the rollers 71 moving at half said speed. Within the framework of the present invention it is also possible for the rollers to take up fixed positions with respect to the longitudinal sleeve 79.

The invention is not limited to the specific embodiments as described above, the scope thereof in the first place being defined by the appended claims. It is emphasised that an important variant of an embodiment according to the invention is e.g. formed by a trailer such as the trailer 1, whose front chassis section 5 and rear chassis section 6 are rigidly interconnected, which sections are jointly movable with respect to the central chassis section 5, however. Thus it is not possible to vary the overall length of the trail 1, to be true, but it is possible to position the axle pairs 11a, 11b, 11c at a desired position under the trailer so as to obtain an optimum axle load.

## Claims

1. An elongated mobile supporting structure for transport containers, comprising a chassis provided with a main chassis section and a sliding chassis section, which is movable with respect to the main chassis section, as well as with front securing means and rear securing means for securing a transport container near the front side and the rear side thereof, said main chassis section comprising central supporting means for supporting a transport container between said front and said rear securing means, said supporting structure further comprising at least one axle pair, which is connected to the main chassis section, **characterized in that** said central support means comprise a bearing arrangement to enable movement of a transport container supported by the central supporting means along said central supporting means.

2. A supporting structure according to claim 1, **characterized in that** the bearing arrangement is a sliding bearing arrangement.

3. A supporting structure according to claim 2, **characterized in that** the sliding bearing arrangement comprises a sliding surface as well as load-bearing element provided with a supporting surface on which he container is directly supported, which element is movable over said sliding surface.

4. A supporting structure according to claim 3, **characterized in that** the sliding surface comprises a plastic material.

5. A supporting structure according to claim 3 or 4, **characterized in that** load-bearing element is an endless element.

6. A supporting structure according to claim 3, 4 or 5, **characterized in that** the load-bearing element comprises at least one chain built up of mutually pivotable link elements, at least some of which are connected to the supporting surface, or at least some of which include a surface that forms the supporting surface.

7. A supporting structure according to claim 6, **characterized in that** a chain is provided at two opposite sides of the supporting surface.

8. A supporting structure according to claim 1, **characterized in that** the bearing arrangement is a roller bearing arrangement.

9. A supporting structure according to claim 8, **characterized in that** the roller bearing arrangement comprises rollers as well as a load-bearing element provided with a supporting surface on which the container is directly supported.

10. A supporting structure according to claim 9, **characterized in that** said load-bearing element is an endless element.

11. A supporting structure according to claim 10, **characterized in** the load-bearing element comprises at least one chain built up of mutually pivotable link elements, at least some of which are connected to the supporting surface, or at least some of which include a surface that forms the supporting surface.

12. A supporting structure according to claim 11, **characterized in that** a chain is provided at two opposite sides of the supporting surface.

13. A supporting structure according to any one of the preceding claims, **characterized in that** the chassis comprises a further sliding chassis section provided with front or rear securing means, which is capable of sliding movement with respect to the main chassis section.

14. A supporting structure according to any one of the preceding claims, **characterized in that that** locking means are provided for locking said main chassis section on the one hand and said sliding chassis section and/or said further sliding chassis section on the other hand in a specific position relative to each other.

15. A supporting structure according to any one of the preceding claims, **characterized in that** the main chassis section is provided with a telescopic portion, within which a telescopic portion of the sliding chassis section and/or a telescopic portion of the further sliding chassis section are movable.

16. A supporting structure according claim 13 and claim 15, **characterized in that** one of the telescopic portion of the sliding chassis section and the telescopic portion of the further sliding chassis section is positioned within the other telescopic portion in a telescoped position of the supporting structure.

17. A supporting structure according to any one of the preceding claims, **characterized in that** the front and the rear securing means are provided at different longitudinal positions of the chassis so as to enable the supporting structure to support transport containers of varying length.

18. A method for using a supporting structure according to any one of the preceding claims, comprising the steps of
A providing an elongated, mobile supporting structure according to any one of the preceding claims, on which a transport container is supported, which is secured to the supporting structure by means of said front securing means and said rear securing means near the front side and the rear side, respectively, of the transport container,
B pushing or pulling the transport container over the supporting structure via a locking engagement provided by the securing means, by telescoping the sliding chassis section in or out with respect to the main chassis section, with the transport container being supported on and at the same time being moved over the central supporting means.

19. A method according to claim 18, comprising as an additional step between step A and step B the step of
C releasing the locking engagement by the securing means at the front side or at the rear side of the transport container and maintaining the other locking engagement,
wherein said pushing or pulling of the transport container during step B takes place via the other locking engagement.
